# EUROPEAN PATENT APPLICATION

(11) **EP 1 055 860 A2**
(43) Date of publication of application: **29.11.2000**
(21) Application number: 00304474.0
(22) Date of filing: 25.05.2000
(51) Int. Cl.: F16L 33/18, F16L 37/084

(54) **Improvements in or relating to pipe joints**

(30) Priority: 26.05.1999 GB 9912120
(71) Applicant: McKechnie Components Limited, Walsall, West Midlands WS9 8DS (GB)
(72) Inventor: Miller, Andrew Howard John, Two Mile Ash, Milton Keynes MK8 8PQ (GB)
(74) Representative: Wightman, David Alexander

(57) **Abstract**

A pipe joint 110 for connecting and sealing a flexible pipe 112 to a rigid tubular member 111 with a bushing 114 therebetween. A connector 140 is provided on the pipe 112 and has resilient arms 151 with hooks 152 arranged for latching engagement with an external collar 141 of the tubular member 111 to secure and retain the pipe 112 and cause the bushing 114 to seal the joint area. The arms 151 have release fingers 153 which can be depressed to disengage the hooks 152 to release the connector 140 to enable the joint 110 to be taken apart.

## Description

This invention concerns improvements in or relating to pipe joints. More particularly, this invention concerns pipe joints for fluid lines, especially, but not exclusively, vehicle fuel and coolant systems in which fluid is conveyed through one or more hoses, pipes, tubes or like conduits.

For convenience, hereinafter, the term "pipe" is used and should be interpreted in the context to include all such conduits.

Fluid lines used in vehicle fuel and coolant systems have to withstand extreme temperatures without loss of fluid being conveyed. This has resulted in the use of a variety of materials to construct the pipes employed in such systems as well as the development of joints to connect the pipes to different components.

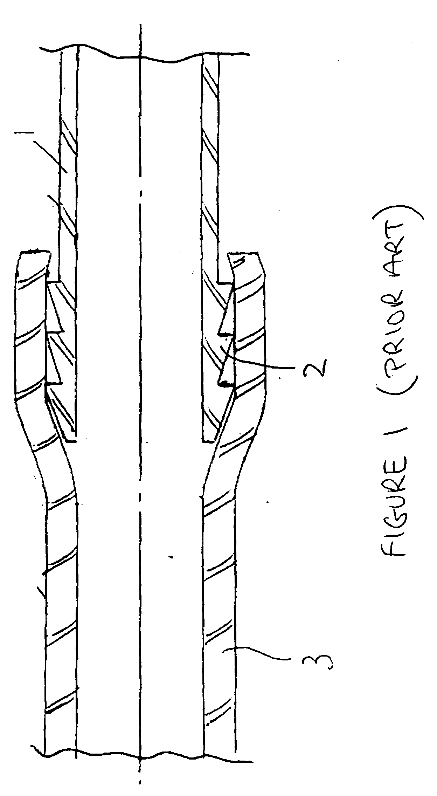

One type of existing joint shown in Figure 1 consists of a rigid pipe or spigot 1 having external annular ribs 2 over which the end of a flexible pipe 3, typically an elastomer pipe, is pushed so that the pipe 3 is held in position by engagement of the ribs 2 with the internal surface of the pipe 3.

This type of joint has a low sealing capability due to the leak path through the joint area and is generally only suitable for low-pressure applications due to the low axial retention of the pipe 3.

As a result, this type of joint has only limited application and is generally unsuitable for vehicle fuel and coolant systems where sealing efficiency and high pressure capability are required.

The pressure capability of such joint may be increased by the provision of an external clamp to compress the pipe radially and enhance the grip provided by the ribs. However, this does not eliminate the problem of the leak path through the joint area and such joint does not meet current requirements.

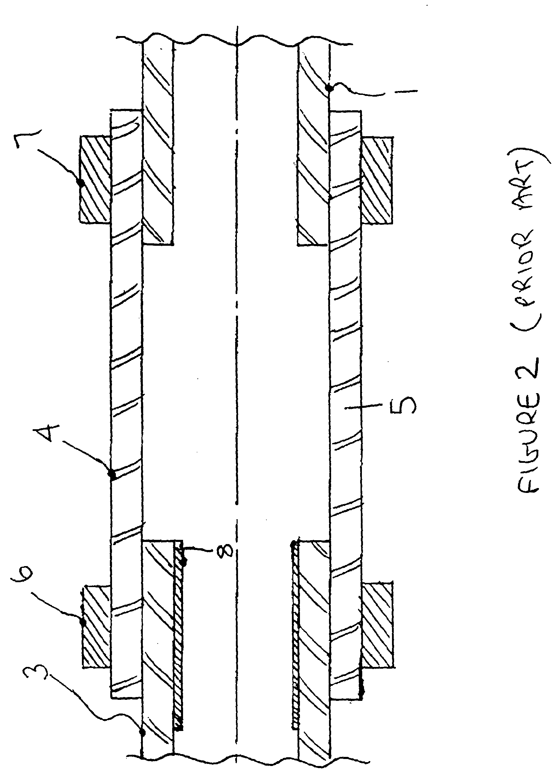

Another type of joint which provides improved sealing efficiency and which can withstand higher pressures is shown in Figure 2. This joint employs a connector 4 in the form of a length of rubber tube 5 extending between the flexible pipe 3 and the rigid pipe or spigot 1.

The tube 5 is secured at each end by an external clamp 6, 7 with a rigid insert 8 located in the end of the flexible pipe 3 to act as a support to prevent the pipe collapsing. The rubber tube 5 produces an improved seal with both the flexible pipe 3 and the rigid pipe 1 and the resulting joint is capable of withstanding higher pressures than the joint shown in Figure 1.

However, the flexibility of the joint can be a problem in some applications and the large rubber surface area can also result in a low permeation resistance to fuel components. Also, the provision of the rubber tube, insert and clamps adds to the cost both in terms of materials and assembly.

The present invention has been made from a consideration of the problems and disadvantages of existing joints above-described.

It is an object of the present invention to provide a pipe joint having improved sealing efficiency and pressure capability.

It is a preferred object of the present invention to provide a pipe joint of simple construction which is easy to assemble and that is reliable in use.

It is a further preferred object of the present invention to provide a pipe joint which can be used for fluid lines in vehicles, especially in fuel and coolant systems.

According to one aspect of the present invention, there is provided a pipe joint comprising a flexible pipe, a rigid tubular member having an end portion received within the pipe, a bushing between the pipe and the tubular member, and fastening means for securing the pipe and sealing the joint area.

In one preferred arrangement, the fastening means comprises a clamp arranged to surround the pipe and contract radially on being tightened to secure and seal the pipe relative to the tubular member. The clamp may be releasable to allow the pipe to be removed for repair and/or replacement.

Advantageously, the bushing is secured to the end portion of the tubular member to prevent the bushing being removed. For example, the bushing may be bonded to the end portion of the tubular member.

More preferably, the end portion of the tubular member has an external shoulder providing an abutment face for engagement with an internal shoulder of the bushing to retain the bushing on the end portion. The external shoulder may be provided at one end of an annular recess in which the bushing is seated to axially locate the bushing on the end portion. The bushing may be a push-fit on the end portion to seat in the recess.

The pipe may be a push-fit on the bushing. For this, the bushing may have a taper surface at one end to act as a guide for centering the pipe. The bushing may have an external shoulder at the other end to provide an abutment or stop for engagement with the pipe to axially locate the pipe. The bushing may have an external recess between the ends into which the pipe is urged when the clamp is tightened to retain the pipe on the end portion of the tubular member.

Preferably, the end portion of the tubular member is received in an enlarged end portion of the pipe. In this way, insertion of the end portion of the tubular member in the pipe does not reduce the internal diameter of the fluid passageway and is limited by an internal shoulder formed by the enlarged end portion of the pipe.

In another preferred arrangement, the fastening means comprises a connector which is located on the pipe and is engageable with the end portion of the tubular member to secure and seal the pipe relative to the tubular member. The connector may be releasable to allow the pipe to be removed for repair and/or replacement.

Advantageously, the connector has at least one resilient formation arranged to snap-engage the end portion of the tubular member to retain axially the connector and thereby secure and seal the pipe relative to the tubular member. For example, the connector may have at least one resilient arm extending axially from one end of a tubular body and turned inwardly at the free end to form a hook for latching engagement with the end portion of the tubular member. The latching engagement may be released by pressing a release portion of the arm.

Preferably, the end portion of the tubular member has an external collar for latching engagement by the connector and which provides an abutment to locate axially the bushing on the tubular member. The bushing may have an external flange at one end for locating against the collar and providing an abutment to locate axially the pipe. Alternatively, the pipe may be axially located against the collar. The bushing may retained by the pipe in the assembled joint or it may be secured to the tubular member, for example by bonding.

Advantageously, the pipe has an enlarged end portion in which the end portion of the tubular member and bushing are received, and the connector has a stepped bore providing an internal shoulder for axially locating and retaining the enlarged end portion of the pipe when the connector is secured to the tubular member. In this way, the internal diameter of the fluid passageway is maintained and removal of the pipe is prevented until the connector is released.

Preferably, the tubular body of the connector is provided with an axial slot allowing the connector to be fitted to the pipe by inserting the pipe laterally through the slot at a region removed from the enlarged end portion and then slid lengthwise along the pipe to locate the body over the enlarged end portion.

Advantageously, the bushing is made of rubber (natural or synthetic) and the flexible pipe is a mono- or multi-layer construction of one or more elastomers with optional reinforcement. The bushing provides an effective seal with no leak path and low surface area producing high permeation resistance.

According to another aspect of the present invention, there is provided a method of joining a flexible pipe to a rigid tubular member comprising providing a bushing of rubber or the like between the pipe and an end portion of the tubular member received in the pipe and securing the pipe to seal the joint area in the assembled joint.

The joint may be assembled by applying a force in a radial direction to secure the pipe and cause the bushing to seal the joint area between the pipe and the end portion of the tubular member. For example, by tightening a clamp surrounding the pipe in a circumferential direction.

Alternatively, the joint may be assembled by applying a force in an axial direction to secure the pipe and cause the bushing to seal the joint area between the pipe and the end portion of the tubular member. For example, by urging a connector surrounding the pipe in an axial direction.

According to yet another aspect of the present invention, there is provided a connector for securing a flexible pipe to a rigid tubular member, the connector comprising a tubular body having a first bore portion and a second bore portion, the second bore portion being of increased diameter relative to the first bore portion for reception of an enlarged end portion of a flexible pipe extending through the first bore portion to locate axially the connector on the end portion of the pipe, and the connector further comprising at least one resilient arm extending axially from the second bore portion and provided with an inwardly directed hook for latching engagement with a rigid tubular member having an end portion received in the enlarged end portion of the pipe to connect the pipe to the tubular member.

Embodiments of the invention will now be described in more detail, by way of example only, with reference to the accompanying drawings in which:-
**Figure 1** is a longitudinal section of a known pipe joint;
**Figure 2** is a longitudinal section of another known pipe joint;
**Figure 3** is a longitudinal section through a pipe joint according to a first embodiment of the invention;
**Figure 4** is a perspective view of a pipe joint according to a second embodiment of the invention; and
**Figure 5** is a longitudinal section through one half of the pipe joint shown in Figure 4.

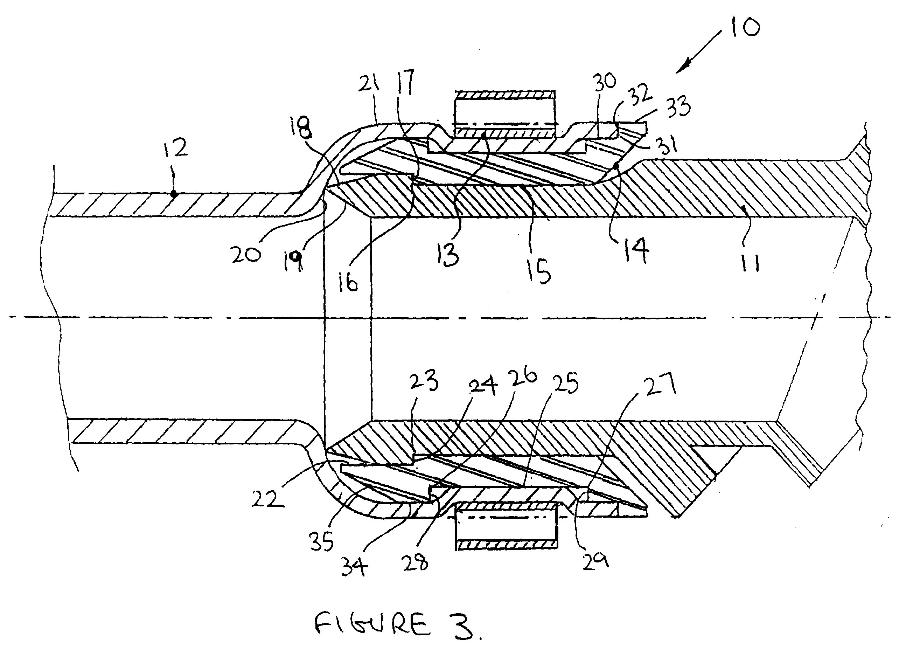

Referring first to Figure 3 of the drawings, a first embodiment of a pipe joint 10 according to the invention is shown comprising a rigid tubular nipple 11 of an end fitting (not shown) to which a flexible pipe 12 of elastomer is secured by a clamp 13 with a bushing 14 of rubber between the nipple 11 and pipe 12 to provide a fluid-tight seal between the nipple 11 and pipe 12.

As shown, the nipple 11 has an external annular recess 15 with a shoulder 16 at one end providing an abutment face 17 normal to the longitudinal axis of the joint.

At the other end, the recess 15 tapers and mergers smoothly with the outer surface of the nipple 11. The forward end of the nipple 11 has external and internal taper surfaces 18 and 19 respectively.

The pipe 12 may be of mono- or multi- layer construction with or without reinforcement depending on the required application. In this embodiment, the pipe 12 is a mono-layer and is corrugated (not shown) for improved flexibility. This is not essential however and the pipe could be smooth.

The end of the pipe 12 is of enlarged diameter providing an internal abutment face 20 against which the end of the nipple 11 seats to axially locate the pipe 12 on the nipple 11. As shown, the internal diameter of the nipple 11 is substantially the same as the internal diameter of the main portion of the pipe 12. As a result, there is no significant change in the internal diameter of fluid passageway in the region of the pipe joint 10 and fluid flow is largely unaffected by the joint 10.

The abutment face 20 leads to an axial sleeve portion 21 which overlies the end of the nipple 11 with radial clearance and extends as far as the tapered end of the recess 15.

The bushing 14 is located between the nipple 11 and the sleeve portion 21. The bushing 14 seats in the recess 15 and has a counterbore 22 at the forward end terminating in an internal shoulder 23 providing an abutment face 24 normal to the longitudinal axis of the joint.

The rear end of the bushing 14 is tapered to facilitate fitment of the bushing 14 by pushing over the end of the nipple 11 to seat in the recess 15 and locate the abutment face 24 against the abutment face 17 to lock the bushing 14 and prevent relative axial movement to remove the bushing 14 from the nipple 11.

The bushing 14 has an external annular recess 25 with shoulders 26, 27 at opposite ends providing abutment faces 28, 29 normal to the longitudinal axis of the joint.

The abutment face 29 at the rear end leads to a short cylindrical surface 30 terminating in a shoulder 31 providing a further abutment face 32 normal to the longitudinal axis of the joint leading to another short cylindrical surface 33.

The abutment face 28 at the front end leads to a short cylindrical surface 34 having a diameter corresponding to the surface 30 at the rear end and which leads to a taper surface 35.

The diameter of the surfaces 34, 30 corresponds to the internal diameter of the sleeve portion 21 of the pipe 12 and the taper surface 35 acts as a guide to centre the sleeve portion 21 for push fit onto the bushing 14 until the end of the pipe 12 abuts the shoulder 31 as shown.

The clamp 13 surrounds the sleeve portion 21 between the ends of the recess 25 and is of a type that contracts radially on being tightened in a circumferential direction to deform the sleeve portion 21 into the recess 15 to secure and seal the pipe 12 relative to the nipple 11 as shown.

One such type of clamp 13 is a so-called "jubilee clip" comprising an annular metal band which can be tightened in a circumferential direction to reduce the diameter for clamping the pipe 12 to the nipple 11 and which can be released to allow the pipe 12 to be removed if required, for example for repair or replacement.

In an alternative arrangement, the clamp 13 may be an annular ring swaged or otherwise reduced in diameter to secure the pipe 12 to the nipple 11. With this method of securing the pipe 12, the ring may have to be deformed or cut to release the clamp 13 and allow the pipe 12 to be removed from the nipple 11 for repair or replacement

As will be understood, the joint 10 can withstand high pressures due to the axial retention provided by the location of the pipe 12 in the recess 25 under the clamping force and the location of the bushing 14 in the recess 15.

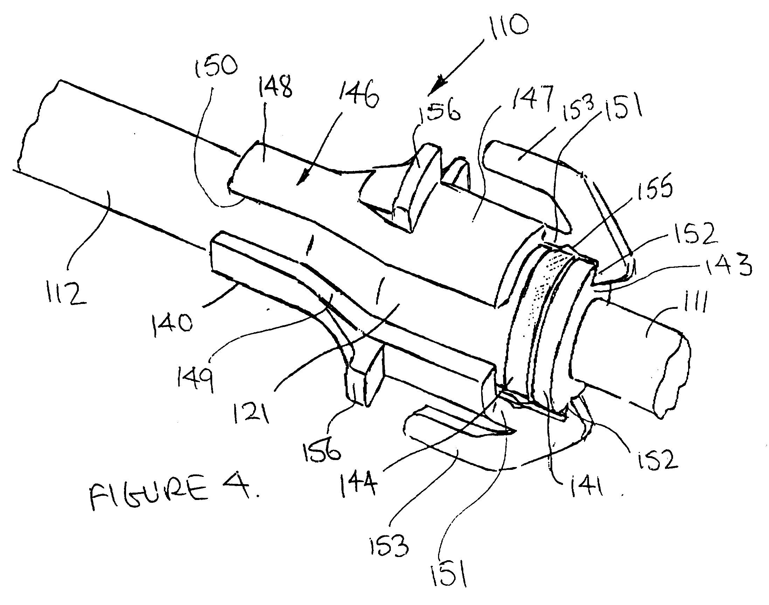

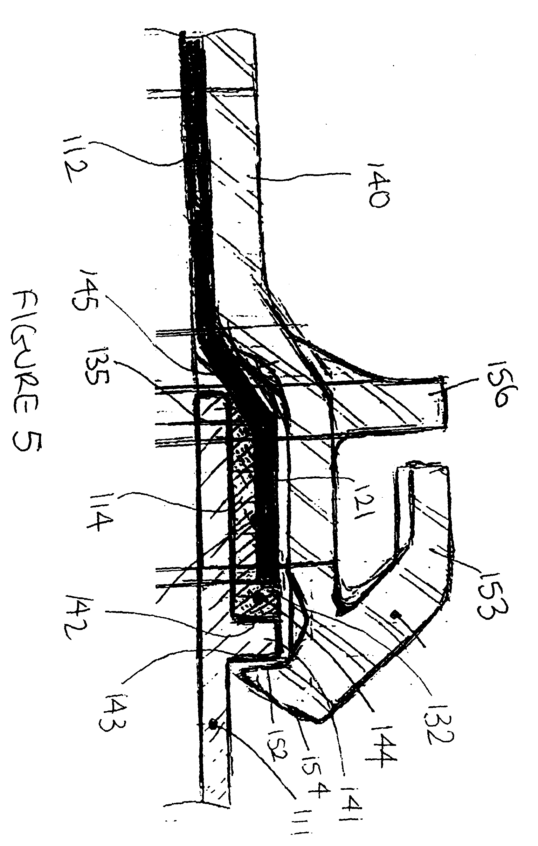

Referring now to Figures 4 and 5, there is shown a second embodiment of the invention in which like reference numerals in the series 100 are used to indicate parts corresponding to the first embodiment above-described.

In this embodiment, a pipe joint 110 is shown comprising a flexible pipe 112 releasably secured to a rigid tubular stub 111 of a fuel tank (not shown) by a connector 140 with a generally cylindrical bushing 114 of rubber between the stub 111 and pipe 112 to provide a fluid-tight seal between the stub 111 and pipe 112.

The stub 111 is cylindrical with an external annular collar 141 spaced from the free end and providing abutment faces 142, 143 on opposite sides normal to the longitudinal axis of the joint 110.

The bushing 114 is a push-fit on the stub 111 and has an external flange 144 at one end that seats against the abutment face 142 of the collar 141 to locate axially the bushing 114 on the stub 111. The other end of the bushing 114 has a taper surface 135 terminating at or near the free end of the stub 111.

As in the previous embodiment, the pipe 112 may be of mono- or multi-layer construction with or without reinforcement depending on the required application. The end of the pipe 112 is of enlarged diameter proving a sleeve portion 121 for push-fit over the bushing 114 assisted by the taper surface 135 of the bushing 114 which acts as a guide to centre the sleeve portion 121.

One end of the sleeve portion 121 locates against the abutment face 132 of the flange 144 which acts as a stop to locate axially the pipe 112 on the stub 111. The other end of the sleeve portion 121 leads to an inclined shoulder portion 145 connecting the sleeve portion 121 to the main part of the pipe 112.

The connector 140 has a tubular body 146 in which the end of the pipe 112 is received. The front end 147 is of enlarged diameter to fit over the sleeve portion 121 and the rear end 148 fits over the main part of the pipe 112. An inclined shoulder portion 149 connects the front and rear ends 147, 148. The connector 140 is snapped over the main part of the pipe 112 by means of a longitudinal slot 150 through which the pipe 112 can be inserted and the connector can be slid lengthwise of the pipe 112 to position the connector 140 at the end of the pipe 112. In this embodiment, the connector 140 is made of plastics material but other materials may be employed.

The front end 147 of the connector 140 is provided with a pair of resilient arms 151 which extend in the axial direction and terminate in radially inwardly directed hooks 152 for latching engagement with the abutment face 143 of the collar 141.

Each arm 151 has a finger 153 extending rearwardly from the free end by means of which the latching engagement of the hooks 152 can be released by pressing the fingers 153 radially inwardly causing the arms 151 to deflect radially outwardly to disengage the hooks 152 from the abutment face 143 and allow the connector 140 to be slid rearwardly.

To assemble the joint 110, the bushing 114 is located by push-fit on the stub 111 and the connector 140 located over the pipe 112 away from the sleeve portion 121. The sleeve portion 121 is then located by push-fit on the bushing 114. Alternatively, the bushing 114 may be located by push-fit in the end of the pipe 112, and the pipe 112 and bushing 114 located by push-fit on the stub 111. Finally, the connector 140 is slid axially along the pipe 112 and over the sleeve portion 121 to snap engage the hooks 152 with the abutment face 143 of the collar 141 to secure and seal the pipe 112 relative to the stub 111 as shown.

The front of each hook 152 is chamfered to provide an inclined surface 154 to enable the arms 151 to deflect outwards due to their resilience and ride over the sleeve portion 121 of the tube 112 as the connector 140 is pushed in the mating direction. When the hooks 152 pass the collar 141, the arms 151 automatically deflect inwards to snap-engage the hooks 152 behind the collar 141 and prevent the connector 140 being de-mated until the fingers 153 are depressed to release the latching engagement of the hooks 152. To assist latching and de-latching, a notch 155 is formed in the inner edge face of each arm 151 to provide a hinge point for deflection of the arms 151. Axial displacement of the connector 140 is assisted by circumferentially spaced, radial lugs 156 behind the fingers.

In the mated condition of the connector 140, the pipe 112 is axially retained by the engagement of the shoulder portion 149 of the connector 140 with the shoulder portion 145 of the pipe 112 to apply a force in an axial direction to secure the pipe 112 and cause the bushing 114 to seal the joint area between the pipe 112 and the stub 111.

As will be understood, the joint 110 can withstand high pressures due to the axial retention provided by the connector 140 and can be easily assembled and dis-assembled.

It will appreciated from the foregoing description of exemplary embodiments that the invented pipe joint has good sealing capability with no leak path due to the presence of the bushing providing a small rubber surface area giving enhanced permeation resistance.

Furthermore, the pipe joint as described is of simple construction which is easy to assemble and reliable in use. As a result, the joint is particularly, but not exclusively, suitable for application to vehicle fuel and coolant systems.

It will be understood that the invention is not limited to the exemplary embodiments above-described which can be changed without departing from the concept or principle of the invention.

Thus, the rigid inner member may be made of metal, alloy or plastics with a nipple or stub as described or any other suitable end portion on which the bushing can be located to seal the assembled joint.

The bushing may be a separate push-on component or may be formed or secured permanently to the inner tubular member by any suitable method, such as adhesive bonding.

As already mentioned, the pipe may also be of mono- or multi-layer construction using any suitable elastomer or combination of elastomers which may be reinforced to provide the required properties for a given application.

Thus, it is envisaged the pipe may include any one or more thermoplastics and/or rubbers (natural or synthetic) which may typically be selected from the group comprising bromoisobutene-isoprene, polybutadiene, chlorinated butylrubber, chlorinated polyethylene, polychloromethoxirene, choroprene, chlorosulfonylpolyethylene, ethyleneoxide, terpolymers of ethylenepropylenediene, copolymers of ethylenepropylenediene, copolymers of ethylenepropylene, isobutene-isoprene, nitryl butadiene, styrenebutadiene, polysuflide, polyphenolsulfide, polyamides, polyesters, polypropylene, vinylidene fluoride, vinyl fluoride, polyvinylidene fluoride, polyvinyl fluoride, polychlorotrifluoroethylene, ethylene tetrafluoroethylene, terafluoroethylene, polytetrafluoroethylene, hexafluoropropene, perfluorobutene, perfluoroisobutene, and thermoplastic elastomers.

It will be understood by those skilled in the art that other modifications of the invented pipe joint are possible including different sizes and types of pipe and inner member as well as different sizes and shapes of bushing and different types of fastening device. All such modifications are deemed within the scope of the invention.

## Claims

1. A pipe joint comprising a flexible pipe, a rigid tubular member having an end portion received within the pipe, a bushing between the pipe and the tubular member, and fastening means for securing the pipe and sealing the joint area.

2. A pipe joint according to Claim 1 characterised in that, the fastening means comprises a clamp arranged to surround the pipe and contract radially on being tightened to secure and seal the pipe relative to the tubular member, the clamp is preferably releasable to allow the pipe to be removed for repair and/or replacement.

3. A pipe joint according to Claim 2 characterised in that, the bushing has an external recess into which the pipe is urged when the clamp is tightened to retain the pipe on the end portion of the tubular member and the bushing is optionally secured to the end portion of the tubular member.

4. A pipe joint according to any one of the preceding Claims characterised in that, the end portion of the tubular member has an external shoulder providing an abutment face for engagement with an internal shoulder of the bushing to retain the bushing on the end portion.

5. A pipe joint according to Claim 1 wherein, the fastening means comprises a connector which is located on the pipe and is engageable with the end portion of the tubular member to secure and seal the pipe relative to the tubular member and the connector is preferably releasable to allow the pipe to be removed for repair and/or replacement.

6. A pipe joint according to Claim 5 characterised in that, the connector has at least one resilient formation arranged to snap-engage the end portion of the tubular member to retain axially the connector and thereby secure and seal the pipe relative to the tubular member.

7. A pipe joint according to Claim 6 characterised in that, the connector has at least one resilient arm extending axially from one end of a tubular body and turned inwardly at the free end to form a hook for latching engagement with the end portion of the tubular member, for example the end portion of the tubular member preferably has an external collar for latching engagement by the connector and which provides an abutment to locate axially the bushing on the tubular member.

8. A pipe joint according to any one of Claims 5 to 7 characterised in that, the pipe has an enlarged end portion in which the end portion of the tubular member and bushing are received, and the connector has a stepped bore providing an internal shoulder for axially locating and retaining the enlarged end portion of the pipe when the connector is secured to the tubular member and the tubular body of the connector is preferably provided with an axial slot allowing the connector to be fitted to the pipe by inserting the pipe laterally through the slot at a region removed from the enlarged end portion and then slid lengthwise along the pipe to locate the body over the enlarged end portion.

9. A pipe joint according to any one of the preceding claims characterised in that, the pipe is a push-fit on the bushing and the bushing preferably has a taper surface at one end to act as a guide for centering the pipe and optionally an external shoulder at the other end to provide an abutment or stop for engagement with the pipe to axially locate the pipe.

10. A method of joining a flexible pipe to a rigid tubular member comprising providing a bushing of rubber or the like between the pipe and an end portion of the tubular member received in the pipe and securing the pipe to seal the joint area in the assembled joint, for example by applying force in radial direction to secure the pipe and cause the bushing to seal the joint area between the pipe and the end portion of the tubular member or alternatively by applying a force in an axial direction to secure the pipe and cause the bushing to seal the joint area between the pipe and the end portion of the tubular member

11. A connector for securing a flexible pipe to a rigid tubular member, the connector comprising a tubular body having a first bore portion and a second bore portion, the second bore portion being of increased diameter relative to the first bore portion for reception of an enlarged end portion of a flexible pipe extending through the first bore portion to locate axially the connector on the end portion of the pipe, and the connector further comprising at least one resilient arm extending axially from the second bore portion and provided with an inwardly directed hook for latching engagement with a rigid tubular member having an end portion received in the enlarged end portion of the pipe to connect the pipe to the tubular member.
